# EUROPEAN PATENT SPECIFICATION

(11) **EP 3 129 202 B1**
(45) Date of publication and mention of the grant of the patent: **08.11.2017**
(21) Application number: 15724028.4
(22) Date of filing: 08.04.2015
(51) Int. Cl.: B28D 7/04, B28D 1/04, B23Q 1/62

(54) **MACHINE TOOL AND MODULAR SYSTEM FOR MACHINING STONE MATERIAL PRODUCTS**
WERKZEUGMASCHINE UND MODULARES SYSTEM ZUR BEARBEITUNG PRODUKTEN AUS STEINMATERIAL
MACHINE OUTIL AND SYSTÈME MODULAIRE POUR USINER DES PRODUITS EN MATÉRIAUX PIERREUX

(30) Priority: 08.04.2014 IT VI20140098
(43) Date of publication of application: 15.02.2017
(73) Proprietor: Maema S.R.L. Unipersonale, 37069 Villafranca di Verona (VR) (IT)
(72) Inventor: LOVATO, Claudio, I-37131 Verona (VR) (IT)
(74) Representative: Maroscia, Antonio
(86) International application number: PCT/IB2015/052537
(87) International publication number: WO 2015/155699

(56) References cited:
- WO-A1-2010/066519
- DE-A1- 4 206 274
- DE-U1- 29 820 397
- IT-A1- MO20 100 054
- US-A1- 2011 303 209

## Description

### Field of the invention

The present invention generally finds application in the field of working of materials with high surface hardness, and particularly relates to a machine tool for working products made of stone or the like materials according to the preamble of claim 1.

The invention also relates to a modular system for working stone materials.

### Background art

Such a machine tool is known from WO2010/066519 A1. Machine tools are known to be used, in the field of processing materials with high surface hardness, for carrying out honing, polishing, scratching, drilling, brushing, calibrating or similar processes thereupon.

The products to be processed may be either slabs of stone or granite, or prefabricated concrete items, prefabricated panels made of concrete, conglomerates, composites or other similar materials.

Generally, these machines comprise a bridge structure overlying a stationary support table for the products to be processed and defining a working area.

Particularly, the bridge structure is designed to move within the working area in a longitudinal direction and comprises a horizontal beam which is placed above the support table and is adapted to slidably support a carriage moving in a transverse direction.

The carriage may have two or more tool-holding heads mounted thereto, which are designed to interact with the block or slab of stone to perform one or more stone-working processes thereon.

Nevertheless, these machines can only process one product at a time and also require it to be manually handled from the support table.

In an attempt to at least partially obviate these drawbacks, machines are known for processing products of stone or stone-like materials which comprise a plurality of modules or workstations for performing multiple independent and simultaneous stone-working processes on different products.

For example, FR8113646 discloses a machine for milling stone products, which comprises a monolithic load-bearing structure defining a plurality of adjacent workstations, each having a stationary support table for the stone slabs.

The load-bearing structure comprises a carriage for each station, having at least one tool-holding head that is designed to move above the corresponding work table in longitudinal and transverse directions.

Particularly, each workstation may be designed to perform a single type of process on the product.

Nevertheless, a first drawback of this arrangement is that the work tables of each station are not connected by slab transferring means.

Thus, at the end of each process, the slabs must be manually removed and/or displaced to the support table of the station adjacent thereto to perform the next stone-working process thereon.

A further drawback is that distinct stone-working processes are very complex to perform on the entire length of the block or portions thereof, in this machine.

This is because they will require the slab to be manually carried from one station to the next as many times as the processing steps that are required to be carried out on the block.

Therefore, the overall block or slab processing times are still very long in this solution, especially when a great number of processes must be performed.

Furthermore, the manual transfer of the block from one station to the next often requires the head to be centered again relative to the block to afford high-precision processing, within predetermined tolerances.

Therefore, a high level of skill and expertise is required of the operator to perform a plurality of accurate stone-working processes with this machine.

Nevertheless, even a highly skilled operator can only partially reduce the risk of obtaining waste or non-conforming products due to manual transfer between stations.

### Disclosure of the invention

The object of the present invention is to overcome the above drawbacks, by providing a machine for processing products made of stone or stone-like materials, that is highly efficient and relatively cost-effective.

A particular object of the present invention is to provide a machine for processing products made of stone materials that can reduce the overall time required for processing the material.

A further object of the present invention is to provide a machine for processing products made of stone materials that can improve the accuracy of the stone-working processes performed on the material.

Another object of the present invention is to provide a machine for processing products made of stone materials that is entirely automated, to minimize any manual work that the operator may be required to perform on the product to be processed.

A further object of the present invention is to provide a machine for processing products made of stone materials that can dramatically reduce the number of waste or non-conforming pieces.

Yet another important object of the present invention is to provide a machine for processing products made of stone materials, that can perform high-precision, accurate stone-working processes on the products, even when used by operators having no special skill.

These and other objects, as better explained hereafter, are fulfilled by a machine tool for working products of stone or the like materials as defined in claim 1.

Advantageous embodiments of the invention are defined in accordance with the dependent claims 2-10.

### Brief Description of the Drawings

Further characteristics and advantages of the invention will be more apparent upon reading of the detailed description of a few preferred embodiments of a machine and a modular system for processing products made of stone materials, which are described as non-limiting examples with the help of the annexed drawings, in which:
FIG. 1 is a perspective view of a machine for processing products made of stone materials according to the invention in a first configuration;
FIG. 2 is a perspective view of a first detail of Fig. 1;
FIG. 3 is a broken-away front view of the machine of Fig. 1;
FIG. 4 is a broken-away lateral view of the machine of Fig. 1;
FIG. 5 is a perspective view of a second detail of Fig. 1;
FIG. 6 is an enlarged perspective view of Fig. 5;
FIG. 7 is a perspective view of a modular system for processing products made of stone materials which comprises a pair of machine tools of the invention, in a second configuration.

### Detailed description of a preferred embodiment

Referring to the accompanying figures, there is shown a machine for processing products made of stone or stone-like materials, which is generally designated by numeral 1, and is designed to perform processes on the surface S of different products P.

The machine 1 may be used either for processing of stone or granite blocks or slabs, or for processing of prefabricated concrete items and/or panels made of concrete, conglomerates, composites or other similar materials.

In the particular configuration of the invention as shown in the figures, the machine 1 may be particularly adapted to perform stone-working processes on products P formed by juxtaposing a plurality of tiles Q made of stone materials.

In its basic form, as best shown in FIGGS. 1 and 2, the machine 1 comprises a support surface 2 which extends in a first longitudinal direction L for supporting the products P being processed and a plurality of working modules 3 each comprising a toolholder head 4 which is designed to carry out a respective processing step on a product P, and a corresponding working area 5 of the support surface 2.

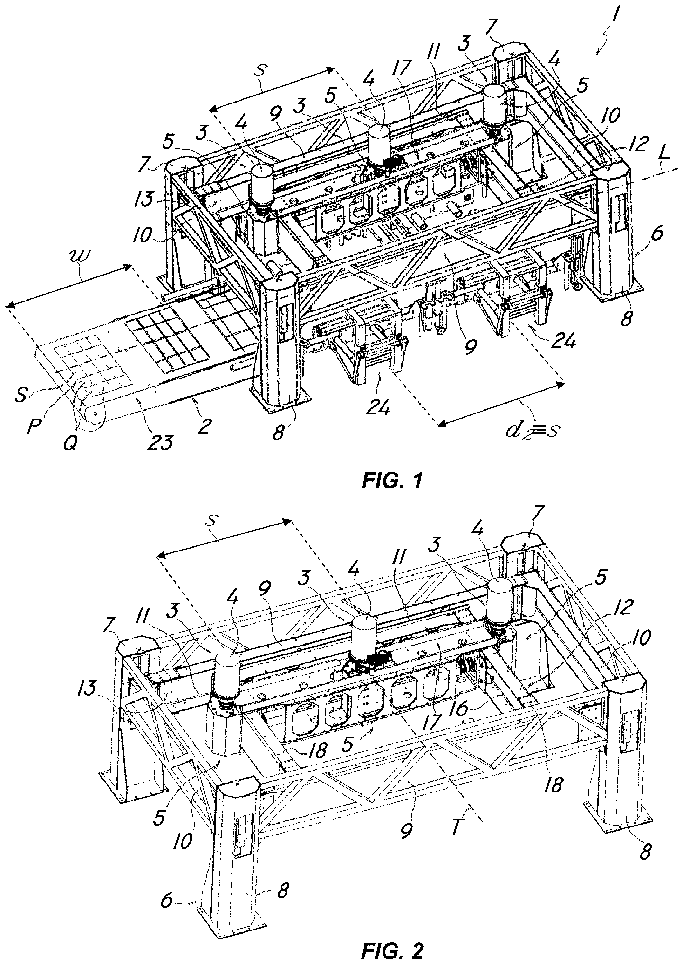

The support surface 2, as best shown in FIG. 1, is adapted to support the product P to be processed within a corresponding working area 5 while the corresponding toolholder head 4 is processing it.

The modules 3 are arranged in side-by-side and equally spaced positions, with a predetermined pitch s along the first longitudinal direction L.

Particularly, each module 3 may be spaced from the adjacent module 3 at a substantially constant pitch s.

The toolholder heads 4 may be adapted to process the product P by a single type of stone-working process, selected from the group comprising milling, leveling, bush-hammering, flaming, scratching or the like.

Furthermore, each head 4 may be designed to have a single processing tool mounted thereon, thereby avoiding automatic tool changing.

According to a peculiar aspect of the invention, the support surface 2 is designed to move stepwise along the first longitudinal direction L with steps having the same magnitude w as the pitch s, to bring the products P situated in each working area 5 to the adjacent working area 5 when the toolholder head 4 of each module 3 has completed the corresponding processing step.

Due to this feature, the products P to be processed, that are located on the support surface 2 will remain in the corresponding working areas 5 during the processing steps that are performed by toolholder heads 4 and will automatically and synchronously move into the adjacent working area 5 as soon as all such processing steps have been completed.

Conveniently, the products P to be processed may be manually or automatically placed on the support surface 2 and may be longitudinally spaced by a distance d₁ that is substantially equal to the pitch s of the modules 3.

As best shown in FIGS. 1 to 4, the machine 1 comprises a frame 6 which is adapted to support the plurality of toolholder heads 4 of adjacent modules 3.

Particularly, the frame 6 comprises at least two pairs of longitudinally offset and equally spaced uprights 7, 8, which are joined at their tops by a pair of longitudinal beams 9.

Furthermore, each pair of uprights 7,8 may be mutually joined by a pair of cross members 10.

Conveniently, a single frame 6 may contain multiple processing modules 3 therein, in side-by-side arrangement along the first longitudinal direction L.

In the particular configuration of the invention as shown in the figures, the machine 1 comprises three modules 3 and three corresponding toolholder heads 4.

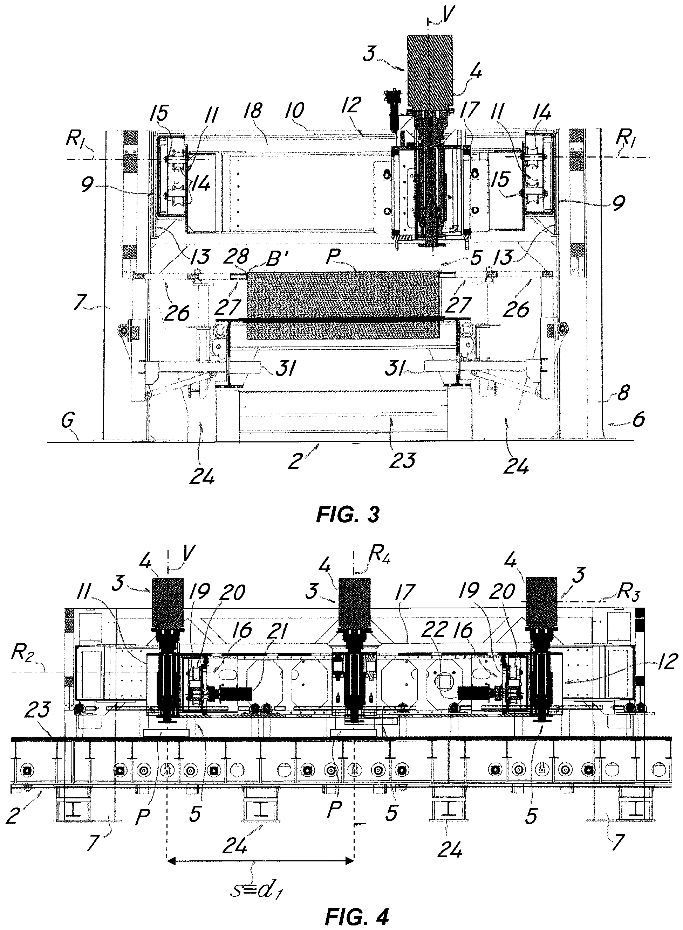

The frame 6 comprises a pair of substantially parallel longitudinal guides 11, as best shown in FIG. 3, which are secured to the beams 9 and are adapted to slidably support a first bridge structure 12.

Conveniently, the longitudinal guides 11 may be secured to the inner faces 13 of the beams.

Furthermore, the first bridge structure 12 may comprise a plurality of first wheels 14, as shown in FIG. 3, which are idly mounted to respective first axles 15 to rotate on the longitudinal guides 11 about respective transverse axes of rotation R₁.

Conveniently, the first bridge structure 12 comprises a pair of longitudinally staggered and substantially parallel transverse guides 16 for slidably guiding along a second transverse direction T substantially orthogonal to the first direction L a second bridge structure 17, on which the toolholder heads 4 associated to the corresponding working areas 5 enclosed within the frame 6 are secured.

The first bridge structure 12 may comprise a pair of transverse beams 18, having the transverse guides 16 secured thereto.

Furthermore, the second bridge structure 17 may comprise a plurality of second wheels 19, as shown in FIG. 4, which are idly mounted to respective second axles 20 to rotate on the second transverse guides 16 about respective longitudinal axes of rotation R₂.

In the illustrated configuration of the invention, the second bridge structure 17 may cause the toolholder heads 4 to simultaneously move in one way along the first longitudinal direction L and/or the second transverse direction T within their respective working areas 5.

Alternatively, in a different configuration of the invention, not shown, the second bridge structure 17 may be configured to cause the toolholder heads 4 to move independently within their corresponding working areas 5.

Particularly, the machine 1 may comprise a plurality of electric motors 21, 22, some of which are visible in FIG. 4, which are associated with the first 12 and second 17 bridge structures to promote controlled translation thereof along their respective longitudinal L and transverse T directions such that the toolholder heads 4 can be moved into their respective working areas 5.

For example, the electric motors 21, 22 may promote the controlled movement of the first 12 and second 17 bridge structures such that the toolholder heads 4 can move into their respective working areas 5, along horizontal, diagonal, zigzag, diagonal, spiral, or similar paths.

Furthermore, continuous dot-like or hatched processing may be performed on the product along the direction of movement of the toolholder heads 4.

Preferably, at least one toolholder head 4 may be designed to move in a third substantially vertical direction V and/or to rotate about respective substantially horizontal R₃ and/or vertical R₄ axes of rotation.

Advantageously, as best shown in FIGS. 1, 3 and 4, the support surface 2 may be defined by a substantially longitudinal conveyor 23 operated by controlled power means, not shown, controlled and synchronized with the toolholder heads 4.

Particularly, the power means may comprise one or more motors connected to the central control unit, not shown, for controlling the operation of the toolholder heads 4.

Preferably, as clearly shown in FIGS. 1, 3 and 4, the support surface 2 may be substantially horizontal and capable of moving along the first longitudinal direction L in both ways.

Thus, at the end of the processing steps, a given product P may move stepwise along the longitudinal direction from a given working area 5 to an adjacent working area 5 upstream or downstream therefrom.

Advantageously, as best shown in FIGS. 1, 5 and 6, the machine 1 may comprise holding means 24 associated with each working area 5 to hold the products P to be processed on the support surface 2 while each toolholder head 4 is carrying out its processing steps.

Particularly, the holding means 24 may be stationary relative to the support surface 2 and may be preferably secured to the ground G or the frame 6 of the machine 1.

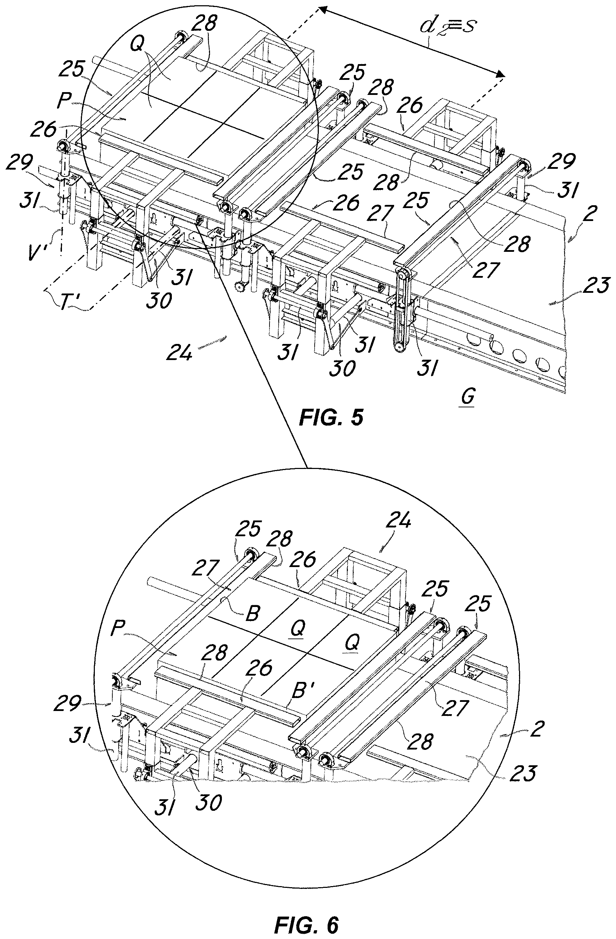

At each working area 5, the holding means 25 may comprise, as clearly shown in FIG. 5, a pair of transverse clamps 25 and a pair of longitudinal clamps 26, which are designed to interact, respectively, with the transverse B and longitudinal B' edges of the products P being processed.

Particularly, a pair of transverse clamps 25 and a pair of longitudinal clamps 26 may be provided for each working area 5.

Furthermore, the transverse 25 and longitudinal 26 clamps of two adjacent working areas 5 may be longitudinally separated by a distance d2 that is equal to the pitch s.

Preferably, the clamps 25, 26 may be formed using a substantially rectangular metal profile 27 having a substantially vertical planar end edge 28.

Particularly, as schematically shown in FIG. 6, during processing of juxtaposed tiles Q, the end edge 28 of the clamps 25, 26 will be designed to interact with the corresponding side edge B, B' of the product P, to prevent the latter from being longitudinally or transversely displaced during an action of a toolholder head 4 in a corresponding working area 5.

Conveniently, as clearly shown in FIG. 5, the pair of transverse clamps 25 and the pair of longitudinal clamps 26 may be designed to move along the vertical and transverse directions respectively relative to the support surface 2.

Thus, the transverse 25 and longitudinal 26 clamps will be adapted to engage/disengage the products P to be processed and to allow stepwise displacement thereof along the first longitudinal direction L.

The holding means 24 may comprise first actuators 29 for promoting the vertical movement of the transverse clamps 25 and second actuators 30 for promoting the transverse movement of the longitudinal clamps 26.

In the illustrated configuration of the invention, the first 29 and second 30 actuators may be hydraulic actuators and may comprise a pair of pistons 31 moving in respective vertical V' and transverse T' directions, for each clamp 25, 26.

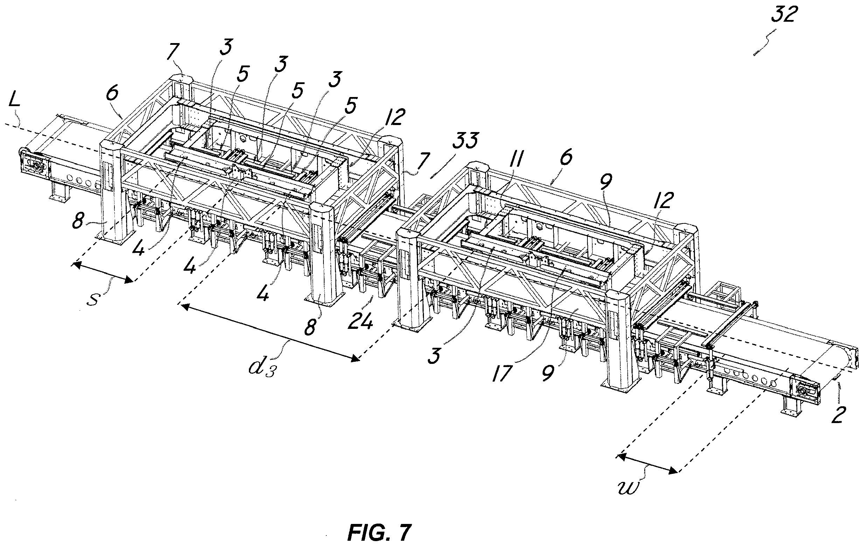

In a further aspect, as shown in FIG. 7, the invention relates to a modular system 32 for processing stone materials, which comprises a processing line 33 with at least two frames 6 arranged one after the other in a first longitudinal direction L.

Each frame 6 of the line 33 comprises a plurality of working modules 3, which are longitudinally spaced with the predetermined pitch s and define respective working areas 5 for the products P to be processed.

Each module 3 comprises a toolholder head 4, which is adapted to carry out a respective processing step on a product P located in the corresponding working area 5, a longitudinal support surface 2 being further provided for the products P to be processed within the working areas 5 of the modules 3.

According to a peculiar feature of the invention, the support surface 2 is designed to move stepwise along the line 33 with steps having the same magnitude w as the pitch s, to bring the products P situated in each working area 5 to the adjacent processing area 5, when the head 4 of each module 2 has completed the corresponding processing step.

Conveniently, the frame 6 of each machine 1 may comprise two pairs of uprights 7, 8, joined by a pair of longitudinal beams 9 that support a first bridge structure 12, the latter being adapted to slide on longitudinal guide means 11 secured to the longitudinal beams 9.

Particularly, the distance d₃ between two modules 3 of two adjacent machines 1 along the line 33 will be equal to the pitch s or to a multiple thereof, for the products P to be properly positioned within the corresponding working areas 5.

The above disclosure clearly shows that the machine tool and the modular system fulfill the intended objects and particularly meet the requirement of reducing the overall product processing times and improving processing accuracy.

The machine and system of the invention are susceptible to a number of changes or variants, within the scope of the invention as defined by the appended claims.

All the details thereof may be replaced by other technically equivalent parts, and the materials may vary depending on different needs, without departure from the scope of the invention as defined by the claims.

While the machine and system have been described with particular reference to the accompanying figures, the numerals referred to in the disclosure and claims are only used for the sake of a better intelligibility of the invention and shall not be intended to limit the claimed scope in any manner.

### Industrial applicability

The present invention may find application in industry, because it can be produced on an industrial scale in factories for manufacturing machine tools for processing stone.

## Claims

1. A machine tool (1) for working products (P) of stone or the like materials, comprising:
- a support surface (2) extending along a first longitudinal direction (L) for supporting the products (P) being worked;
- a plurality of working modules (3) each comprising one toolholder head (4) for performing a respective working phase and defining a corresponding working area (5) of said support surface (2);
- at least one frame (6) designed to support a plurality of toolholder head (4) of adjacent modules (3);
**characterized in that** said frame (6) comprises at least two pairs of uprights (7, 8) that are longitudinally offset and equispaced, which pairs are joined upwards by a pair of longitudinal beams (9), a pair of substantially parallel longitudinal guides (11) being anchored to said pair of longitudinal beams (9) and designed to slidably support one first bridge-like structure (12), wherein said first bridge structure (12) comprises a pair of longitudinally staggered and substantially parallel transverse guides (16) for slidably guiding a second bridge structure (17) lengthwise a second direction (T) substantially perpendicular to the first direction (L), said second bridge structure (17) having mounted thereon said toolholder heads (4) which are associated to the corresponding working areas (5).

2. Machine as claimed in claim 1 wherein said modules (3) are arranged in adjacent and equispaced positions with a predetermined pitch (s) along said first longitudinal direction (L).

3. Machine as claimed in claim 2, **characterized by** comprising suitable controlled drive means which bare synchronized with said toolholder heads (4) and operating on said support surface (2) for allowing its stepwise advancement along said first longitudinal direction (L) with steps of magnitude (w) equal to said pitch (s) and displacement of the products (P) located in each working area (5) of each module (3) to the adjacent working area (5) of the next module (3) at the end of the corresponding working phase.

4. Machine as claimed in claim 1, **characterized in that** each pair of uprights (7, 8) is joined by a pair of cross-members (10) to enclose internally thereof said working areas (5) of said plurality of modules (3).

5. Machine as claimed in claim 1, **characterized in that** said support surface (2) is defined by a substantially horizontal conveyer belt (23), movable bidirectionally along said longitudinal direction (L).

6. Machine as claimed in claim 1, **characterized by** comprising holding means (24) associated to each working area (5) to hold the products (P) on said support surface (2) during a corresponding working phase executed by each of said toolholder heads (4).

7. Machine as claimed in claim 6, **characterized in that** said holding means (24) are stationary relative to said support surface (2) and comprise for each working area (5) a pair of transverse clamps (25) and a pair of longitudinal clamps (26) designed to interact, respectively, with the transverse edges (B) and the longitudinal edges (B') of the products (P) under working.

8. Machine as claimed in claim 7, **characterized in that** said pair of transverse clamps (25) and said pair of longitudinal clamps (26) are movable, respectively, vertically and horizontally relative to said support surface (2) to engage, respectively disengage the products (P) and allow their stepwise movement along said first longitudinal direction (L).

9. Machine as claimed in claim 1, **characterized in that** at least one of said toolholder heads (4) is movable along a third substantially vertical direction (V).

10. A modular machine tool system (32) for working products (P) of stone or the like materials, comprising at least two machines (1) according to one or more of the preceding claims arranged one after the other along a first longitudinal direction (L), **characterized by** comprising a support surface (2) common to both the machines (1) and operated by drive means to allow its stepwise advancement along said first longitudinal direction (L) with steps of magnitude (w) equal to said pitch (s) and displacement of the products (P) located in each working area (5) of each module (3) to the adjacent working area (5) of the next module (3) at the end of the corresponding working phase.

## Patentansprüche

1. Eine Werkzeugmaschine (1) zur Bearbeitung von Produkten (P) aus Stein oder ähnlichen Materialien, bestehend aus:
- einer Auflagefläche (2), die sich entlang einer ersten Längsrichtung (L) zur Auflage der bearbeiteten Produkte (P) erstreckt;
- einer Mehrzahl von Bearbeitungsmodulen (3), von denen jedes einen Werkzeughaltekopf (4) zum Ausführen einer bestimmten Bearbeitungsphase und Bestimmung eines entsprechenden Arbeitsbereichs (5) der genannten Auflagefläche (2) umfasst;
- mindestens eines Rahmens (6), der zum Tragen einer Mehrzahl von an die Werkzeughalteköpfe (4) angrenzenden Module (3) bestimmt ist;
**dadurch gekennzeichnet, dass** der genannte Rahmen (6) mindestens zwei Paar von Ständern (7, 8) aufweist, die in Längsrichtung versetzt und im gleichen Abstand angeordnet sind, wobei die Paare aufwärts durch ein Paar Längsbalken (9) verbunden werden, ein Paar im Wesentlichen paralleler Längsführungen (11) an dem genannten Paar von Längsbalken (9) befestigt ist und dazu dient, eine erste brückenartige Konstruktion (12) verschiebbar zu halten, wobei die genannte erste Brückenkonstruktion (12) ein Paar in Längsrichtung versetzter und im Wesentlichen paralleler Schrägführungen (16) zur verschiebbaren Führung einer zweiten Brückenkonstruktion (17) in Längsrichtung entlang einer zweiten Richtung (T), im Wesentlichen rechtwinklig zur ersten Richtung (L) umfasst, auf der genannten zweiten Brückenkonstruktion (17) die genannten Werkzeughalteköpfe (4) montiert sind, die den jeweiligen Arbeitsbereichen (5) zugeordnet sind.

2. Maschine gemäß Patentanspruch 1, wobei die genannten Module (3) angrenzend und in Positionen mit gleichem, vorab festgelegten Abstand (s) entlang der genannten ersten Längsrichtung (L) angeordnet sind.

3. Maschine gemäß Patentanspruch 2, **dadurch gekennzeichnet, dass** durch das Vorhandensein von auf geeignete Weise gesteuerten Antriebsmitteln, die allein mit den genannten Werkzeughalterköpfen (4) synchronisiert sind und an der genannten Auflagefläche (2) arbeiten, um ihre schrittweise Vorwärtsbewegung entlang der genannten ersten Längsrichtung (L) mit Schritten einer Weite (w) gleich dem genannten Abstand (s) und der Verschiebung der Produkte (P), die in den jeweiligen Arbeitsbereichen (5) jedes Moduls (3) angeordnet sind, zum angrenzenden Arbeitsbereich (5) des nächsten Moduls (3) am Ende der jeweiligen Bearbeitungsphase zu ermöglichen.

4. Maschine gemäß Patentanspruch 1, **dadurch gekennzeichnet, dass** jedes Paar von Ständern (7, 8) durch ein Paar von Querstreben (10) verbunden ist, um in deren Inneren die genannten Arbeitsbereiche (5) der genannten Mehrzahl von Modulen (3) einzuschließen.

5. Maschine gemäß Patentanspruch 1, **dadurch gekennzeichnet, dass** die genannte Auflagefläche (2) durch ein im Wesentlichen waagerechtes Förderband (23) gebildet wird, das in beiden Richtungen entlang der genannten Längsrichtung (L) bewegt werden kann.

6. Maschine gemäß Patentanspruch 1, **dadurch gekennzeichnet, dass** sie Haltemittel (24) umfasst, die jedem Arbeitsbereich (5) zugeordnet sind, um die Produkte (P) auf der genannten Auflagefläche (2) während der entsprechenden Bearbeitungsphase festzuhalten, die von jedem der genannten Werkzeughalteköpfe (4) ausgeführt wird.

7. Maschine gemäß Patentanspruch 6, **dadurch gekennzeichnet, dass** die genannten Haltemittel (24) in Bezug auf die genannte Auflagefläche (2) ortsfest sind sowie für jeden Arbeitsbereich (5) ein Paar Querklemmen (25) und ein Paar Längsklemmen (26) umfassen, die dazu dienen, jeweils mit den Querkanten (B) und den Längskanten (B') der in Bearbeitung befindlichen Produkte (P) zu interagieren.

8. Maschine gemäß Patentanspruch 7, **dadurch gekennzeichnet, dass** das genannte Paar von Querklemmen (25) und das genannte Paar von Längsklemmen (26) jeweils senkrecht und waagerecht zur genannten Auflagefläche (2) beweglich sind, um die Produkte (P) festzuhalten oder freizugeben sowie ihre schrittweise Bewegung entlang der ersten Längsrichtung (L) zu ermöglichen.

9. Maschine gemäß Patentanspruch 1, **dadurch gekennzeichnet, dass** zumindest einer der genannten Werkzeughalteköpfe (4) entlang einer dritten, im Wesentlichen senkrechten Richtung (V) beweglich ist.

10. Ein modulares Werkzeugmaschinensystem (32) zur Bearbeitung von Produkten (P) aus Stein oder ähnlichen Materialien, das zumindest zwei Maschinen (1) umfasst, die gemäß einem oder mehreren der vorausgehenden Patentansprüche nacheinander entlang einer ersten Längsrichtung (L) angeordnet sind, **dadurch gekennzeichnet, dass** es eine Auflagefläche (2) umfasst, die zu beiden Maschinen (1) gehört und dass es von Antriebsmitteln betrieben wird, um ihre schrittweise Vorwärtsbewegung entlang der genannten ersten Längsrichtung (L) mit Schritten mit einer Weite (w) gleich dem genannten Abstand (s) und Verschiebung der in jedem Arbeitsbereich (5) jedes Moduls (3) befindlichen Produkte (P) zu dem angrenzenden Arbeitsbereich (5) des nächsten Moduls (3) am Ende der jeweiligen Bearbeitungsphase ermöglicht.

## Revendications

1. Machine-outil (1) pour l'usinage de produits (P) en pierre ou en matériaux de type pierre, comprenant :
- une surface de support (2) s'étendant le long d'une première direction longitudinale (L), pour supporter les produits (P) en cours d'usinage ;
- une pluralité de modules d'usinage (3), comprenant chacun une tête porte-outil (4) conçue pour exécuter une étape d'usinage, et une zone de travail correspondante (5) de ladite surface de support (2) ;
- au moins un châssis (6) destiné à supporter une pluralité de têtes porte-outils (4) de modules adjacents (3);
**caractérisée en ce que** ledit châssis (6) comprend au moins deux paires de montants (7, 8) décalés en direction longitudinale et espacés régulièrement, lesdites paires étant unies en haut par une paire de poutres longitudinales (9), une paire de guides longitudinaux sensiblement parallèles (11) étant ancrée à ladite paire de poutres longitudinales (9) et étant destinée a supporter de façon coulissante une première structure en pont (12), dans laquelle la première structure en pont (12) comprend une paire de guides transversaux (16) sensiblement parallèles et décalés en direction longitudinale pour guider de façon coulissante une deuxième structure en pont (17) dans le sens de la longueur dans une deuxième direction (T) sensiblement perpendiculaire à la première direction (L), ladite deuxième structure en pont (17) comportant lesdites têtes porte-outils (4) montées sur celle-ci et associées aux zones de travail (5) correspondantes.

2. Machines selon la revendication 1, dans laquelle lesdits modules (3) sont agencés selon des positions adjacentes et espacées régulièrement avec un pas prédéterminé (s) le long de ladite première direction longitudinale (L).

3. Machine selon la revendication 2, **caractérisée en ce qu'**elle comprend des moyens d'entraînement contrôlés appropriés, synchronisés avec lesdites têtes porte-outils (4), et opérant sur ladite surface de support (2) pour en permettre l'avancement par étapes le long de ladite première direction longitudinale (L) avec des étapes de grandeur (w) égales audit pas (s), et pour permettre le déplacement des produits (P) situés dans chaque zone de travail (5) de chaque module (3) vers la zone de travail adjacente (5) du module suivant (3) à la fin de l'étape d'usinage correspondante.

4. Machine selon la revendication 1, **caractérisée en ce que** chaque paire de montants (7, 8) est unie par une paire de traverses (10) de manière a renfermer à l'intérieur lesdites zones de travail (5) de ladite pluralité de modules (3).

5. Machine selon la revendication 1, **caractérisée en ce que** ladite surface de support (2) est définie par une bande transporteuse sensiblement horizontale (23) se déplaçant dans les deux sens de marche le long de ladite direction longitudinale (L).

6. Machine selon la revendication 1, **caractérisée en ce qu'**elle comprend des moyens de retenue (24) associés à chaque zone de travail (5) pour retenir les produits (P) sur ladite surface de support (2) au cours d'une étape d'usinage correspondante exécutée par chacune desdites têtes porte-outils (4).

7. Machine selon la revendication 6, **caractérisée en ce que** lesditsmoyens de retenue (24) sont fixes par rapport à ladite surface de support (2) et comprennent, pour chaque zone de travail (5), une paire de pinces transversales (25) et une paire de pinces longitudinales (26) conçues pour venir en interaction, respectivement, avec les bords transversaux (B) et les bords longitudinaux (B') des produits (P) en cours d'usinage.

8. Machine selon la revendication 7, **caractérisée en ce que** ladite paire de pinces transversales (25) et ladite paire de pinces longitudinales (26) peuvent être déplacées, respectivement, verticalement et horizontalement par rapport à ladite surface de support (2) pour engager/désengager les produits (P) et en permettre le mouvement par étapes le long de ladite première direction longitudinale (L).

9. Machine selon la revendication 1, **caractérisée en ce qu'**au moins l'une desdites têtes porte-outils (4) peut être déplacée le long d'un troisième direction sensiblement verticale (V).

10. Système de machine-outil modulaire (32) pour l'usinage de produits (P) en pierre ou en matériaux de type pierre, comprenant au moins deux machines (1) selon l'une ou plusieurs des revendications précédentes, agencées l'une derrière l'autre le long d'une première direction longitudinale (L), **caractérisée en ce qu'**il comprend une surface de support (2) commune aux deux machines (1) et actionnée par des moyens d'entraînement opèrent pour en permettre l'avancement par étapes le long de ladite première direction longitudinale (L) avec des étapes de grandeur (w) égales audit pas (s), et pour permettre le déplacement des produits (P) situés dans chaque zone de travail (5) de chaque module (3) vers la zone de travail adjacente (5) du module suivant (3) à la fin de l'étape d'usinage correspondante.
